# EUROPÄISCHE PATENTSCHRIFT

(11) **EP 1 737 640 B1**
(45) Veröffentlichungstag und Bekanntmachung des Hinweises auf die Patenterteilung: **25.02.2009**
(21) Anmeldenummer: 04801100.1
(22) Anmeldetag: 09.12.2004
(51) Int. Cl.: B29C 47/68, B01D 29/66

(54) **RÜCKSPÜLBARE FILTERVORRICHTUNG**
BACKFLUSHABLE FILTER DEVICE
DISPOSITIF DE FILTRAGE NETTOYABLE A CONTRE-COURANT

(30) Priorität: 28.01.2004 AT 1152004
(43) Veröffentlichungstag der Anmeldung: 03.01.2007
(73) Patentinhaber: EREMA Engineering Recycling Maschinen und Anlagen Gesellschaft m.b.H., 4052 Ansfelden-Linz (AT)
(72) Erfinder: BACHER, Helmut, A-4490 St. Florian (AT); SCHULZ, Helmuth, A-4020 Linz (AT); WENDELIN, Georg, A-4033 Linz (AT)
(74) Vertreter: Wildhack, Helmut
(86) Internationale Anmeldenummer: PCT/AT2004/000433
(87) Internationale Veröffentlichungsnummer: WO 2005/072932

(56) Entgegenhaltungen:
- US-A- 5 308 484

## Beschreibung

Die Erfindung bezieht sich auf eine rückspülbare Filtereinrichtung für thermoplastisches Kunststoffmaterial, mit einem Gehäuse, in welchem zumindest ein Zuführkanal für das zu filtrierende Material und zumindest ein Abgabekanal für das filtrierte Material vorgesehen sind, und mit zumindest einem im Gehäuse angeordneten Trägerkörper, der zumindest zwei Siebnester trägt und im Gehäuse zwischen einer Filtrierstellung und zumindest einer, einem Siebnest zugeordneten Rückspülstellung verlagerbar ist, wobei in der Filtrierstellung an der Zustromseite der Siebnester angeordnete Verteilerräume über Zuströmkanäle mit zumindest einem Zuführkanal in Fließverbindung stehen und an der Abstromseite der Siebnester angeordnete Sammelräume über Abströmkanäle mit zumindest einem Abgabekanal in Fließverbindung stehen und in Rückspülstellung des Trägerkörpers filtriertes Material aus dem Sammelraum eines Siebnestes über einen im Trägerkörper angeordneten Rückspülkanal in den Sammelraum eines anderen, zu reinigenden Siebnestes gelangt und bei geschlossenem Abstromkanal dieses anderen Siebnestes zusammen mit der Verunreinigung dieses Siebnestes über den Verteilerraum dieses Siebnestes in einen Rückspülauslasskanal abführbar ist. Eine solche Bauweise einer rückspülbaren Filtervorrichtung ist aus EP 540 546 B1 bekannt und hat sich bewährt. Dennoch besteht der Wunsch, diese Bauweise durch Verkürzung der Ausspülwege und Verbesserung der Verhältnisse beim Umschalten zwischen Filtrieren und Rückspülen noch weiter zu verbessern. Die Erfindung löst diese Aufgabe dadurch, dass jedem Siebnest zumindest ein im Gehäuse relativ zum Trägerkörper verlagerbarer Steuerkörper für die abschnittweise Rückspülung dieses Siebnestes zugeordnet ist, wobei jeder dieser Steuerkörper einen Abfuhrkanal bildet, der in der Rückspülstellung über zumindest eine Steueröffnung mit zumindest einem Rückspülauslasskanal in Fließverbindung steht. Durch sinnvolle Anordnung dieses Steuerkörpers relativ zur Lage des Rückspülauslasskanales des Trägerkörpers lässt sich die Länge des Rückspülauslasskanales im Vergleich zu der eingangs beschriebenen bekannten Konstruktion stark verkürzen, was gleichbedeutend ist mit einer Verringerung der Gefahr einer Verkrackung von Kunststoffmaterial in diesem Auslasskanal. Zugleich wird der Vorteil erreicht, dass bei sinnvollen Verlagerungen des Trägerkörpers und des Steuerkörpers der Rückspülvorgang nicht schon beginnt, wenn der Trägerkörper in die Rückspülstellung gebracht ist, sondern erst dann, wenn durch entsprechende Verlagerung des Steuerkörpers dessen Steueröffnung in Deckung gebracht ist mit dem Rückspülauslasskanal des Trägerkörpers. Dies führt zu einer Verringerung des Verschleißes am Trägerkörper, was gleichbedeutend ist mit einer Verlängerung der Standzeit des Trägerkörpers und damit der gesamten Vorrichtung.

Gemäß einer bevorzugten Bauweise der Erfindung sind pro Siebnest zumindest zwei voneinander unabhängig verlagerbare Steuerkörper vorhanden, deren jeder einem Abschnitt des Siebnestes für die Rückspülung dieses Abschnittes zugeordnet ist. Obwohl sich eine abschnittweise Rückspülung des Siebnestes auch schon ohne diese Maßnahme erzielen lässt, wird durch die zuletzt erwähnte Maßnahme die abschnittweise Rückspülung noch weiter verbessert und bei sinnvoller Konstruktion für alle Abschnitte des Siebnestes gleichmäßig gestaltet.

Gemäß einer Weiterbildung der Erfindung ist jeder Steuerkörper von einem in seiner Längsrichtung verschiebbaren und/oder um seine Längsachse verdrehbaren Schieber gebildet, wobei der Abfuhrkanal sich in Achsrichtung des Schiebers erstreckt und jede Steueröffnung die Wand des Abfuhrkanals durchsetzt. Hierbei hat zumindest ein Schieber zumindest zwei Steueröffnungen, die für einen verschiebbaren Schieber in Längsrichtung des Schiebers relativ zueinander versetzt sind, für einen verdrehbaren Schieber in Umfangsrichtung des Schiebers.

Eine besonders einfache Konstruktion ergibt sich dann, wenn jeder Steuerkörper von einem Rohr gebildet ist, das in einer Bohrung des Gehäuses verschiebbar und/oder verdrehbar geführt ist. Der Aufwand für die Fertigung des Steuerkörpers reduziert sich damit auf die Ausbildung der Steueröffnungen, die durch Bohren in einfacher Weise herstellbar sind, da für das Rohr des Steuerkörpers handelsübliche Bauteile verwendet werden können.

Besondere Vorteile ergeben sich im Rahmen der Erfindung, wenn jeder Rückspülauslasskanal etwa mittig in Bezug auf den ihm zugeordneten Abschnitt des Siebnestes angeordnet ist, weil sich dadurch der Bedarf an gereinigtem Kunststoffmaterial für den Rückspülvorgang reduzieren lässt und gleichmäßige Verhältnisse für alle Abschnitte des Siebnestes erzielbar sind.

Im Rahmen der Erfindung besteht ferner die Möglichkeit, die Verteilerräume zu verkleinern. Dies lässt sich erfindungsgemäß dadurch erreichen, dass zumindest ein Siebnest zwei gekrümmte Lochplatten aufweist, zwischen denen ein im flachgelegten Zustand kreisrundes Sieb angeordnet ist, wobei beide Lochplatten in eine Aufnahmeöffnung des Trägerkörpers eingesetzt sind, die einen entsprechend der Krümmung der Lochplatten ovalen Querschnitt hat, gesehen in Achsrichtung der Aufnahmeöffnung, wobei die Lochplatten so angeordnet ist, dass die konvexe Seite beim Filtriervorgang zustromseitig liegt. Dadurch ergibt sich die erwähnte Verkleinerung der Verteilerräume und zugleich eine Vergrößerung der Sammelräume, welch letzterer Umstand sich günstig beim Rückspülvorgang auswirkt, da die beim Rückspülvorgang verwendete gereinigte Schmelze sich gleichmäßiger auf die gesamte Fläche des rückzuspülenden Filterabschnittes verteilen kann. Zugleich wird die Möglichkeit der Verwendung handelsüblicher kreisrunder Siebe gewahrt und die Verdrehung der Lochplatten verhindert.

Im Rahmen der Erfindung kann die Fläche jedes Siebnestes in beliebig viele Abschnitte unterteilt werden, die einzeln oder in Gruppen rückspülbar sind. Eine strenge Unterteilung der Siebfläche in einzelne getrennt voneinander rückspülbare Abschnitte lässt sich leicht erzielen, wenn bei zumindest einem Siebnest der Sammelraum durch zumindest eine das Sieb abstützende Querwand in Abschnitte des Sammelraumes unterteilt ist. Diese Querwände begünstigen zugleich die Abstützung des Siebes beim Rückspülvorgang, was sich insbesondere bei der zuvor erwähnten Bauweise mit gekrümmten Lochplatten sehr günstig auswirkt.

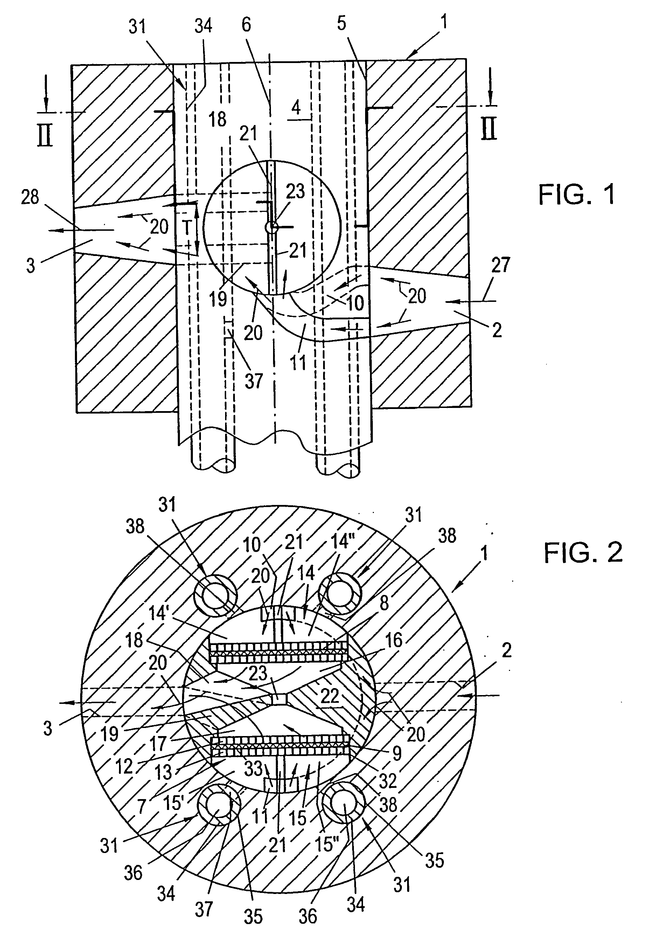

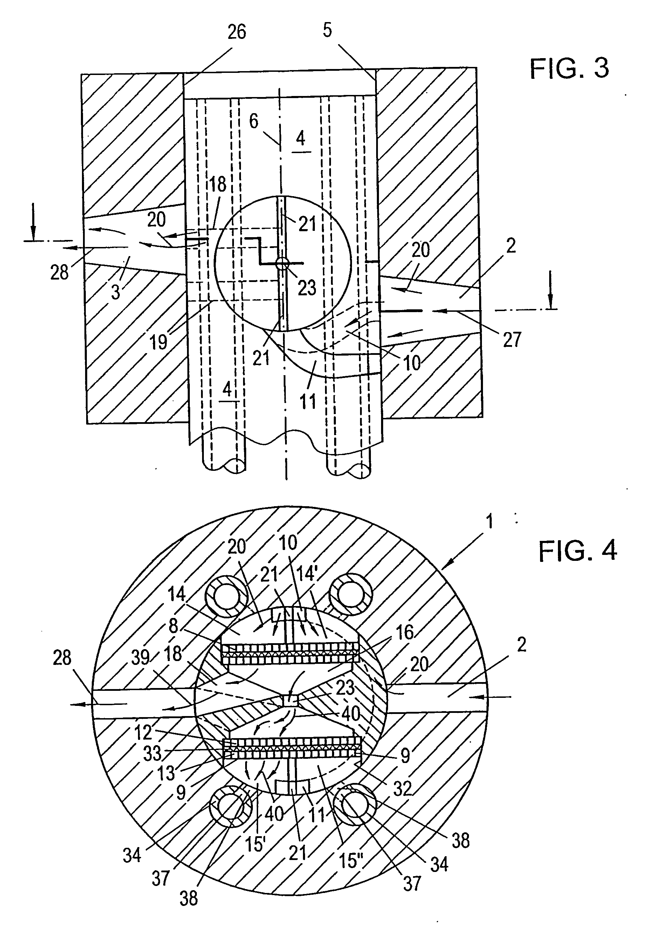

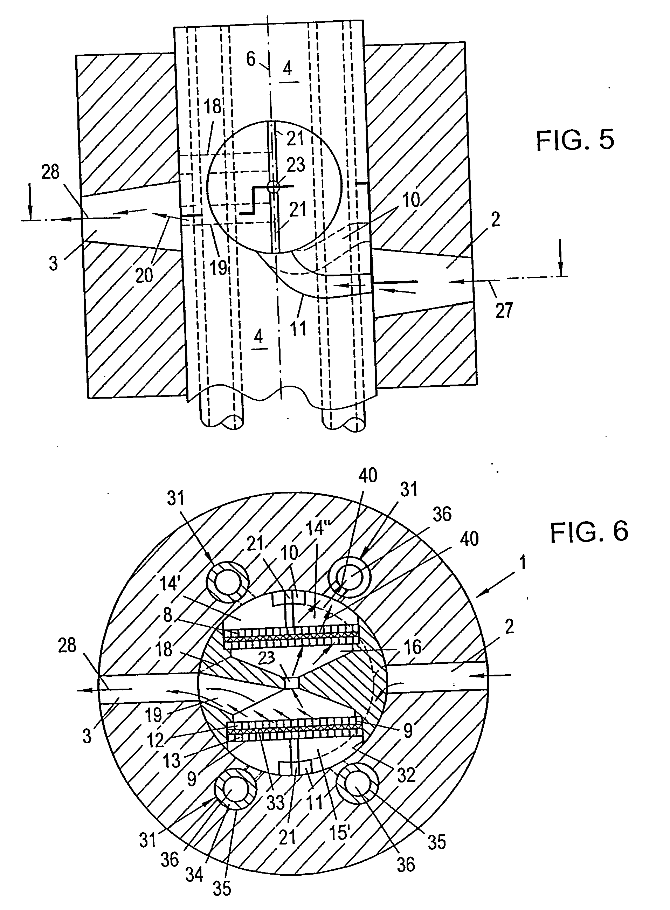

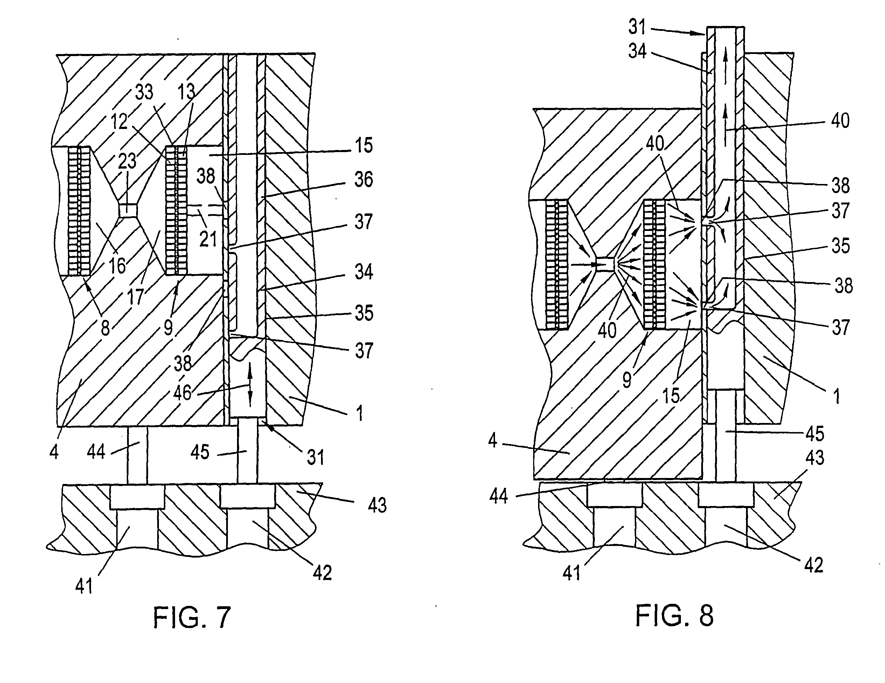

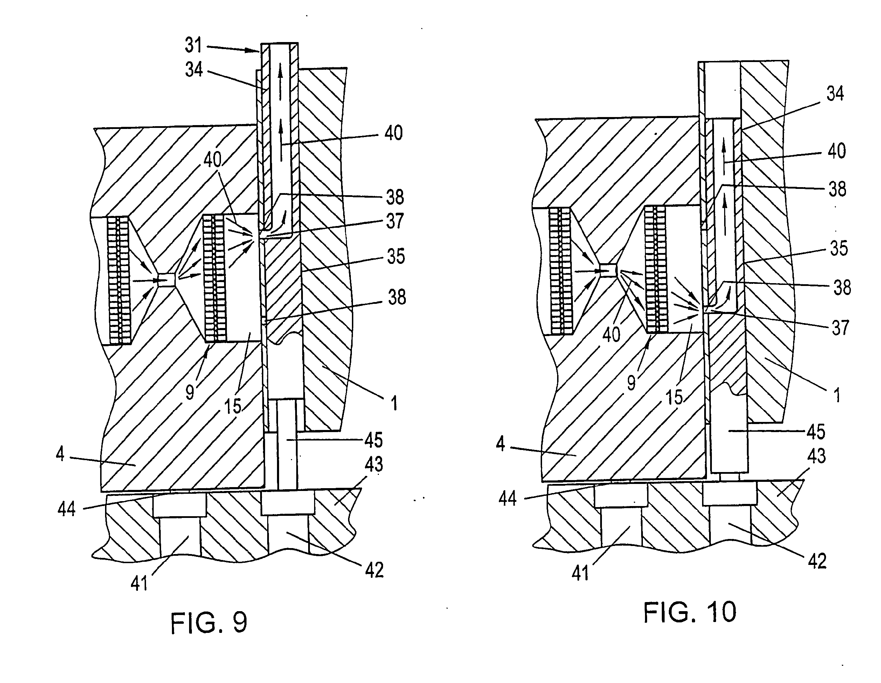

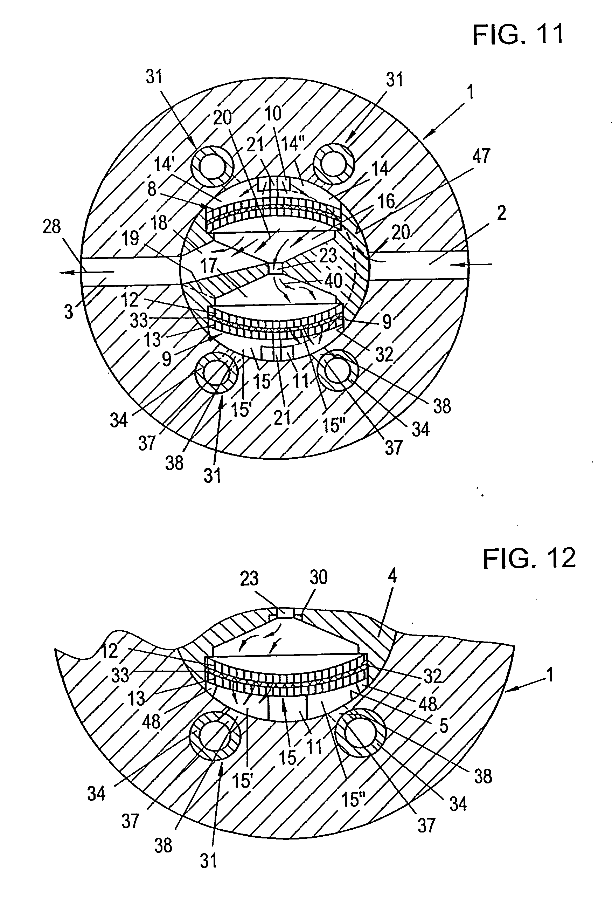

In der Zeichnung sind Ausführungsbeispiele der Erfindung schematisch dargestellt. Fig. 1 zeigt die Vorrichtung in Filtrierstellung im Schnitt durch die Achse des Trägerkörpers, wobei letzterer jedoch in Seitenansicht dargestellt ist. Fig. 2 zeigt die Vorrichtung nach Fig. 1 im Schnitt nach der Linie II - II der Fig. 1. Die Fig. 3 und 4 sind Schnitte ähnlich den Fig. 1 bzw. 2, sie zeigen jedoch die Vorrichtung in Rückspülstellung für die linke Hälfte des in Fig. 4 unten liegenden Siebnestes. Die Fig. 5 und 6 sind Schnitte ähnlich den Fig. 3 bzw. 4, sie zeigen jedoch die Vorrichtung in der Rückspülstellung für die rechte Hälfte des in Fig. 6 obenliegenden Siebnestes. Fig. 7 zeigt die Vorrichtung mit einem als Längsschieber ausgebildeten Steuerkörper in Filtrierstellung im Schnitt durch die Achse des Steuerkörpers. Fig. 8 zeigt die Vorrichtung nach Fig. 7 in einer Stellung, in welcher das gesamte Siebnest rückgespült wird. Fig. 9 zeigt die Vorrichtung nach Fig. 7 und 8 in einer Stellung für die Rückspülung des in Fig. 9 obenliegenden Abschnittes des Siebnestes. Fig. 10 zeigt die Vorrichtung nach Fig. 7 bis 9 in einer Stellung für die Rückspülung des in Fig. 10 untenliegenden Abschnittes des Siebnestes. Fig. 11 zeigt in einem Schnitt ähnlich Fig. 2 eine Ausführungsform mit gekrümmten Lochplatten der Siebnester und Fig. 12 zeigt eine Ausführungsvariante zu Fig. 11.

Bei der Ausführungsform nach den Fig. 1 bis 6 hat die Vorrichtung ein Gehäuse 1, das einen Zuführkanal 2 für das zu filtrierende thermoplastische Kunststoffmaterial und einen Abgabekanal 3 für das filtrierte Material aufweist. Auf dem Weg vom Zuführkanal 2 zum Abgabekanal 3 durchströmt das Material einen Trägerkörper 4 in Form eines Rotationszylinders, welcher in einer zylindrischen Bohrung 5 des Gehäuses 1 in Richtung seiner Achse 6 längsverschiebbar geführt ist. In den Trägerkörper 4 ist eine Siebanordnung 7 eingebettet, welche zwei Siebnester 8, 9 aufweist, deren jedes aus zwei Lochplatten 12, 13 besteht, zwischen denen eine Filtereinlage 33 zur Filtrierung des Kunststoffmateriales liegt. Den Siebnestern 8, 9 wird das zu filtrierende Material in der Filtrierstellung der Vorrichtung (Fig. 1, 2) mittels Zuströmkanälen 10 bzw. 11 zugeführt, welche in vor den Siebnestern 8, 9 liegende Verteilerräume 14 bzw. 15 des Trägerkörpers 4 münden. Hinter den Siebnestern 8, 9 gesehen in Flussrichtung der Schmelze beim Filtriervorgang (Pfeile 20), liegen im Trägerkörper 4 Sammelräume 16, 17 für die Schmelze, aus welchen Räumen die Schmelze durch Abströmkanäle 18, 19 in den für beide Abströmkanäle 18, 19 gemeinsamen Abgabekanal 3 strömt. Die Zuströmkanäle 10, 11 der beiden Siebnester 8 bzw. 9 münden jeweils beiderseits einer mittigen Wand 21, welche senkrecht auf die beiden Lochplatten 12, 13 des jeweiligen Siebnestes 8, 9 steht und von diesen Lochplatten bis zum Umfang des Trägerkörpers 4 reicht, sodass diese Wand 21 das zugeordnete Sieb beim Rückspülen gegen die Wand der Bohrung 5 abstützt. Die beiden Lochplatten 12, 13 sind zusammen mit der zwischen ihnen liegenden Filtereinlage 33 in eine Aufnahmeöffnung 32 des Trägerkörpers 4 eingesetzt. Die Wand unterteilt somit den zugeordneten Verteilerraum 14 bzw. 15 in jeweils zwei einander volumsmäßig im Wesentlichen gleiche Abteile, die somit Abschnitte 14', 14" bzw. 15', 15" des jeweiligen Siebnestes 8 bzw. 9 definieren.

Die beiden Sammelräume 16, 17 sind voneinander durch eine quer zur Achse des Trägerkörpers 4 verlaufende Trennwand 22 voneinander getrennt. Diese Trennwand ist von zumindest einer mittigen Bohrung oder Durchbruch durchsetzt, welche Bohrung die beiden Sammelräume 16, 17 miteinander verbindet und einen Rückspülkanal 23 bildet.

Das Gehäuse 1 weist ferner pro Siebnestabschnitt 14', 14", 15', 15" einen Steuerkörper 31 auf, der bei dieser Ausführungsform von einem Rohr gebildet ist, welches einen Schieber 34 bildet, der in Längsrichtung des Rohres in einer Bohrung 35 des Gehäuses 1 längsverschieblich geführt ist. Dieses Rohr bildet mit seinem Hohlraum einen Abfuhrkanal 36 für die beim Rückspülvorgang vom rückgespülten Sieb gelösten Verunreinigungen. Dieser Abfuhrkanal 36 führt aus dem Gehäuse 1 heraus ins Freie oder in eine diese Verunreinigungen auffangenden Sammelraum. Die Wand des Rohres des Steuerkörpers 31 ist von zumindest einer Steueröffnung 37 durchsetzt, wobei diese Steueröffnung in der Rückspülstellung mit einem Rückspülauslasskanal 38 des Gehäuses 1 in Deckung gebracht ist, in der Filtrierstellung jedoch durch entsprechende Verlagerung des Steuerkörpers 31 vom Gehäuse 1 abgedeckt ist.

Die beiden Abströmkanäle 18, 19 sind in Richtung der Achse 6 um ein Teilungsmaß T (Fig. 1) relativ zueinander versetzt. Der Abstand T ist so bemessen, dass in der in den Fig. 1 und 2 dargestellten Filtrierstellung die Mündungen beider Abströmkanäle 18, 19 von der Eingangsöffnung des Abgabekanals 3 überdeckt sind, sodass das filtrierte Material ungehindert aus dem Trägerkörper 4 abströmen kann. Eine gegen die beiden Kanäle 18, 19 gerichtete trichterförmige Erweiterung des Abgabekanals 3 erleichtert dies. Dieselbe Teilung T findet sich auf der Zulaufseite, und zwar sind die Mündungen der beiden Zuströmkanäle 10, 11 gleichfalls in Richtung der Achse 6 relativ zueinander versetzt, wobei die Mündungen dieser Zuströmkanäle 10, 11 an der Wand des Trägerkörpers 4 von der trichterartig erweiterten Mündung des Zuführkanals 2 in der Filtrierstellung (Fig. 1, 2) zur Gänze überdeckt sind. In der Filtrierstellung wird somit die zu filtrierende Schmelze allen vier Abschnitten 14', 14", 15', 15" der beiden Siebnester 8, 9 gleichmäßig zugeführt. Diese Schmelze durchströmt die beiden Filtereinlagen 33, wird dadurch gereinigt und die gereinigte Schmelze strömt durch die Abströmkanäle 18, 19 in den Abgabekanal 3.

Der Trägerkörper 4 lässt sich durch geeignete Maßnahmen um seine Achse 6 nicht drehen, jedoch in Richtung dieser Achse 6 nach Wahl in eine von mehreren Rückspülstellungen verschieben. Von diesen Rückspülstellungen sind zwei in den Fig. 3, 4 bzw. 5, 6 dargestellt. In der Stellung nach den Fig. 3, 4 wird der linke Abschnitt 15' des Siebnestes 9 gereinigt. In der Stellung nach den Fig. 5, 6 wird der rechte Abschnitt 14" des Siebnestes 8 rückgespült. In der Rückspülstellung nach den Fig. 3, 4 ist der Trägerkörper 4 aus der in den Fig. 1, 2 dargestellten Filtrierstellung soweit nach unten verschoben, dass einerseits der Abströmkanal 19 durch die Innenwand 26 des Gehäuses 1 abgeschlossen ist, an welcher der Trägerkörper 4 längsverschiebbar geführt ist, anderseits auch der Zuströmkanal 11. Die in Richtung des Pfeiles 27 in den Zuführkanal 2 einleitete, zu reinigende Kunststoffschmelze kann somit aus dem Zuführkanal 2 lediglich in den Zuströmkanal 10 eintreten und strömt dort in Richtung der Pfeile 20 in die beiden Abschnitte 14', 14" des Verteilerraumes 14. Die dort eingeleitete Schmelze durchtritt die Filtereinlage 33 des Siebnestes 8, wird hierbei gereinigt und strömt zum Teil über den Abströmkanal 18 in den Abgabekanal 3 (Pfeile 39), aus dem sie in Richtung des Pfeiles 28 zur Verwendungsstelle, z.B. zu einem Schneckenextruder mit angeschlossener Form, strömt. Der andere Teil der Schmelze strömt aus dem Sammelraum 16 in Richtung der Pfeile 14 durch den Rückspülkanal 23 in den Sammelraum 17 des anderen Siebnestes 9. Aus diesem Sammelraum 17 kann die Schmelze durch das Siebnest 9 nur in den linken Abschnitt 15' des Verteilerraumes 15 eintreten, da nur von dort eine Möglichkeit zum Weiterströmen der Schmelze gegeben ist, denn für diesen Abschnitt 15' steht die Steueröffnung 37 des den Steuerkörper 31 bildenden Schiebers 34 in Fließverbindung mit dem diesem Siebabschnitt 15' zugeordneten Rückspülauslasskanal 38. Der dem Abschnitt 15" des Siebnestes 9 zugeordnete Steuerschieber 34 ist jedoch in einer Stellung, in welcher seine Steueröffnung 37 nicht in Fließverbindung mit dem diesem Abschnitt 15" zugeordneten Rückspülauslasskanal 38 steht. Es wird daher nur der linke Abschnitt des Siebnestes 9 durch die aus dem Rückspülkanal 23 zugeführte gereinigte Schmelze rückgespült. Die in diesem Abschnitt 15' an der Filtereinlage 33 festgesetzten Verunreinigungen werden durch diese Spülschmelze gelöst und aus dem betreffenden Abschnitt 15' des Verteilerraumes 15 in Pfeilrichtung 40 durch die strömende Schmelze mitgenommen und über den Rückspülauslasskanal 38 und die mit ihm in Fließverbindung stehende Steueröffnung 37 in den Abfuhrkanal 36 des Steuerschiebers und von dort ins Freie oder in den erwähnten Sammelraum gebracht. Wie ersichtlich, bleibt bei diesem auf die linke Hälfte des Siebnestes 9 beschränkten Reinigungsvorgang die Versorgung des an den Abgabekanal 3 angeschlossenen Systems mit Schmelze aufrecht und es entsteht nur ein geringer Druckabfall im Abgabekanal 3 in Bezug auf die normale Filterposition (Fig. 1, 2). Da nur eine Hälfte des Siebnestes 9 gespült wird, konzentriert sich der über den Rückspülkanal 23 zugeführte reine Schmelzestrom auf diese linke Siebhälfte, so dass durch diese Siebhälfte eine erhöhte Fließgeschwindigkeit der Schmelze und damit ein verbesserter Reinigungseffekt auftritt. Nach abgelaufener Rückspülzeit wird der Schieber 34 wieder so verlagert, dass seine Steueröffnung 37 abgeschlossen ist, worauf der Rückspülvorgang für diesen Siebabschnitt 15' beendet ist. Wenn kein anderer Siebabschnitt rückgespült werden soll, wird der Trägerkörper 4 wieder zurück in die Filtrierstellung (Fig. 1) gebracht, worauf die Filtrierung der über den Zuführkanal 2 zugeführten Schmelze wieder voll durchgeführt wird.

Analoge Verhältnisse liegen vor, wenn die rechte Hälfte des Siebnestes 9 gespült werden soll. Der Trägerkörper 4 wird in die Rückspülposition verschoben, in welcher, wie dies im Zusammenhang mit den Fig. 3 und 4 beschrieben wurde, der Abströmkanal 19 in Bezug auf den Abgabekanal 3 abgeschlossen ist und auch der Zuströmkanal 11 relativ zum Zuführkanal 2 abgeschlossen ist. Der Steuerschieber 34 des rechten Siebabschnittes 15" wird dann in die Rückspülposition gebracht, wodurch seine Steueröffnung 37 in Fließverbindung gebracht wird mit dem zugehörigen Rückspülauslasskanal 38. Das Rückspülmaterial kann daher aus dem dem Abschnitt 15" des Siebnestes 9 zugehörigen Teil des Sammelraumes 17 abfließen. Der Rückspülvorgang ist beendet, sobald der Steuerschieber 34 so verlagert wird, dass seine Steueröffnung 37 geschlossen ist.

Die Verhältnisse für die Rückspülung des in den Zeichnungen obenliegenden Siebnestes 8 sind analog zu den vorbeschriebenen Rückspülstellungen nach den Fig. 3 und 4. Die Strömung der Schmelze für die Rückspülung des rechten Abschnittes 14" des Teilraumes 14 ist durch die Pfeile 40 in Fig. 6 angedeutet.

Wie ersichtlich, muss der Trägerkörper 4 zwar in verschiedene Positionen verlagerbar sein, aber hierzu nicht unbedingt in Längsrichtung verschiebbar sein. Es ist vielmehr durchaus möglich, die beschriebene Zuschaltung bzw. Abschaltung der einzelnen Kanäle auch durch eine Verdrehung des Trägerkörpers 4 um seine Achse 6 zu erreichen. Das gleiche gilt für die Steuerkörper 31, auch sie können statt von längsverschieblichen Schiebern auch von Drehschiebern gebildet sein. Es ist sogar die Kombination beider Varianten (Verschiebung und Verdrehung) für die Steuerschieber 31 denkbar, insbesondere dann, wenn jedes Siebnest in mehr als zwei Abschnitte unterteilt ist.

Wie ersichtlich, sind die Siebnester 8, 9 in ihren Aufnahmeöffnungen 32 des Trägerkörpers 4 so eingesetzt, dass die Siebflächen zueinander parallel sind. Dies bildet eine übersichtliche, leicht herstellbare Anordnung und erleichtert Montage und Demontage. Zur Erzielung besonderer Strömungsverhältnisse wäre es jedoch auch denkbar, die beiden Siebnester 8, 9 etwa in V-förmiger Anordnung in den Trägerkörper 4 einzubetten, ebenso wie auch mehr als zwei Siebnester vorgesehen sein können. Weiters kann, wie bereits erwähnt, auch jedes Siebnest in mehr als zwei Abschnitte für die Rückspülung unterteilt werden, wozu lediglich die Anordnung der Rückspülauslasskanäle 38 wie der Rückspülauslassschieber 34 entsprechend zu wählen ist. Die Verwendung gleich großer Abschnitte, in welche die Verteilerräume 14, 15 der Siebnester unterteilt sind, empfiehlt sich aus Gründen der Gleichmäßigkeit, insbesondere hinsichtlich des über den Abgabekanal 3 abgegebenen Durchsatzes, ist aber nicht unbedingt erforderlich.

Im Wesentlichen ist das Verhältnis des Schmelzestromes, welcher bei der Rückspülung aus dem jeweiligen Sammelraum in den jeweils aktiven Abfuhrkanal 36 des Steuerschiebers 34 strömt, zum gesamten durch die Vorrichtung beim Filtriervorgang fließenden Kunststoffstrom durch die Kanalquerschnitte bestimmt. Dieses Verhältnis kann durch Einsetzung unterschiedlicher Drosselkörper in die beim Rückspülvorgang aktiven Kanäle, insbesondere in den Rückspülkanal 23, beeinflusst werden. Ein als Drosseldüse ausgebildetes, den Durchflusswiderstand beeinflussendes, austauschbares Drosselglied 30 ist in Fig. 2 schematisch angedeutet. Gegebenenfalls kann ein solches Drosselglied hinsichtlich seines Durchströmquerschnittes einstellbar sein, um sich an unterschiedliche Betriebsverhältnisse anpassen zu können.

In Fig. 7 ist in einer anderen Darstellung nochmals die Filtrierposition dargestellt. Es ist ersichtlich, dass sich der Trägerkörper 4 und der Steuerkörper 31 jeweils in einer solchen Position befinden, dass zwei dem Siebnest 9 zugeordnete Rückspülauslasskanäle 38 des Gehäuses 1 durch die Wand des Schiebers 34 abgeschlossen sind, sodass sich also die diese Wand durchsetzenden Steueröffnungen 37 nicht mit den Rückspülauslasskanälen 38 decken. Wie ersichtlich, ist dies unabhängig davon, ob eine Wand 21 im Verteilerraum 15 angeordnet ist oder nicht. Die entsprechende Verlagerung des Trägerkörpers bzw. des Steuerkörpers 31 erfolgt durch doppeltwirkende hydraulische oder pneumatische Zylinder 41 bzw. 42, welche an einem Gestell 43 der Vorrichtung fixiert sind und deren Kolbenstangen 44 bzw. 45 mit dem Trägerkörper 4 bzw. dem Steuerkörper 31 verbunden sind, sodass diese Bauteile in Richtung des Doppelpfeiles 46 verlagerbar sind.

Bei der in Fig. 8 dargestellten Rückspülstellung ist die Anordnung so getroffen, dass die gesamte Fläche des Siebnestes 9 rückgespült wird. Hierzu sind der Trägerkörper 4 und der Steuerkörper 31 durch die Zylinder 41 bzw. 42 so verlagert, dass die Steueröffnungen 37 des Steuerkörpers 31 in Fließverbindung gebracht sind mit den Rückspülauslasskanälen 38, wobei letztere so liegen, dass sie möglichst zentral zur rückzuspülenden Siebfläche angeordnet sind. Die Strömung der beim Rückspülvorgang verwendeten Schmelze ist durch die Pfeile 40 angedeutet.

Für die Rückspülung eines Abschnittes des Siebnestes 9 bestehen zwei Möglichkeiten: Entweder wird der Trägerkörper 4 so verlagert, dass der jeweils inaktiv zu machende Rückspülauslasskanal 38 durch das Gehäuse 1 abgedeckt ist und der andere Rückspülauslasskanal 38 in Fließverbindung steht mit einer der beiden Steueröffnungen 37. Die andere Möglichkeit besteht darin, den Steuerschieber 34 so zu verlagern, dass nur eine der beiden Steueröffnungen 37 in Fließverbindung steht mit dem jeweils aktiv zu machenden Rückspülauslasskanal 38.

Während die Fig. 7 und 8 Ausführungsformen zeigen, bei welchen der Steuerschieber 34 zwei voneinander in axialem Abstand liegende Steueröffnungen 37 aufweist, zeigen die Fig. 9 und 10 eine Ausführung mit nur einer Steueröffnung 37 des Steuerschiebers 34. Diese Steueröffnung 37 kann in Fließverbindung gebracht werden mit einer der beiden Rückspülauslasskanäle 38. In Fig. 9 ist dies dargestellt für die Rückspülung des obenliegenden Abschnittes des Siebnestes 9, in Fig. 10 für die Rückspülung des unteren Abschnittes des Siebnestes 9.

Wenngleich hier keine Wand 21 dargestellt ist, welche den Verteilerraum 15 des rückzuspülenden Siebnestes 9 in zwei Abschnitte unterteilt, so findet dennoch eine im wesentlichen abschnittweise Rückspülung des Siebnestes 9 statt. Dies deswegen, weil bei sinnvoller Anordnung des Rückspülauslasskanals 38 in Bezug auf den rückzuspülenden Siebabschnittes sich im Verteilerraum 15 Strömungsverhältnisse ergeben, die die Rückspülung des dem Rückspülauslasskanal 38 benachbarten Siebabschnittes begünstigen, was durch die Pfeile 40 in den Fig. 9 und 10 angedeutet ist, und zwar in Fig. 9 für den oberen Abschnitt des Siebnestes 9, in Fig. 10 für den unteren Abschnitt desselben.

Fig. 11 zeigt eine Ausführungsform, bei welcher die Siebnester gekrümmte bzw. bombierte Form haben. Hierzu sind die beiden Lochplatten 12, 13 des Siebnestes gekrümmt ausgebildet, wobei sie im in die Aufnahmeöffnung 32 eingesetzten Zustand mit der konvexen Seite nach außen, also im Filtrierzustand zuströmseitig, liegen. Zwischen den beiden Lochplatten 12, 13 liegt die Filtereinlage 33, die einen kreisförmigen Umfang im flachgelegten Zustand aufweist, sodass handelsübliche Filtereinlagen verwendet werden können. Um dies zu ermöglichen, haben die Aufnahmeöffnung 32 und die beiden Lochplatten 12, 13 ovale Umfangsform, entsprechend der gewählten Krümmung der Lochplatten 12, 13. Die Lochplatten 12, 13 können durch Wände 21 gegen die Wand 47 der Bohrung 5 abgestützt sein, in welcher der Trägerkörper 4 verschiebbar geführt ist. Dadurch werden einerseits die Lochplatten 12, 13 beim Rückspülvorgang abgestützt, anderseits wird der betreffende Verteilerraum 14 bzw. 15 in die beiden Abschnitte 14', 14" bzw. 15', 15" unterteilt, wie bereits erwähnt. Die gekrümmte Ausbildung der Lochplatten 12, 13 vergrößert den beim Rückspülvorgang die Rückspülschmelze bereitstellenden Sammelraum 16 bzw. 17 und verkleinert dementsprechend die Größe des beim Rückspülvorgang hinter den Lochplatten 12, 13 (gesehen in Fließrichtung der Schmelze) liegenden Verteilerraum 14 bzw. 15. Dies begünstigt einerseits die Intensität des Rückspülvorganges und verkleinert andererseits das bei Beginn des Rückspülvorganges im betreffenden Verteilerraum 14 bzw. 15 befindliche Schmelzevolumen. Zudem ergibt sich durch die ovale Umfangsform der Lochplatten für sie eine Verdrehsicherung.

In Fig. 11 ist die Rückspülung für den dem rechtsliegenden Abschnitt 15" des Verteilerraumes 15 zugeordneten Teil des Siebnestes 9 dargestellt, wobei nur für den rechts unten liegenden Steuerkörper 31 dessen Steueröffnung 37 in Fließverbindung steht mit dem ihm zugeordneten Rückspülauslasskanals 38. Für die anderen Steuerkörper 31 liegen deren Steueröffnungen so, dass keine Fließverbindung zum jeweiligen Rückspülauslasskanal besteht.

Die Ausführungsform nach Fig. 12 unterscheidet sich von jener nach Fig. 11 lediglich dadurch, dass die Wand 21 entfällt. Um in diesem Fall einen ausreichend großen Verteilerraum 15 zu schaffen und dennoch die Lochplatten 12, 13 und das dazwischenliegende Filter 33 sicher zu halten, hat der Rand der der Wand der Bohrung 5 benachbarten Lochplatte 13 Vorsprünge 48 bzw. entsprechend gestaltete Flächen, die sich an dieser Wand abstützen. Diese zusätzliche Abstützung kann auch bei Verwendung der Wand 21 nützlich sein.

In Fig. 12 ist ferner zum Unterschied gegenüber Fig. 11 die Rückspülung für den linken Abschnitt 15' des Verteilerraumes 15 dargestellt. Die Strömungsverhältnisse sind hier ähnlich jenen, welche im Zusammenhang mit den Fig. 9 und 10 beschrieben wurden.

Bei allen Ausführungsformen sind die Rückspülauslasskanäle 38 möglichst mittig in Bezug auf den jeweils zugeordneten Abschnitt des Siebnestes angeordnet. Dadurch werden gleich lange Ausfließwege für die Schmutzteilchen und damit eine gleichmäßige Rückspülung des jeweiligen Abschnittes des Siebnestes erzielt. Weiters wird der Bedarf an Rückspülmaterial verringert.

Es ist zweckmäßig, die Trennwand 22, welche zwischen den beiden Sammelräumen 16, 17 liegt, möglichst dünn auszubilden, insbesondere im zentralen Abschnitt der Trennwand 22. Dies ergibt eine entsprechende Vergrößerung der Querschnitte der Abströmkanäle 18, 19 und dadurch besonders günstige Strömungsverhältnisse für die Kunststoffschmelze. Weiters wird dadurch die Länge des Rückspülkanals 23 auf ein Minimum begrenzt. Dieser Rückspülkanal 23 braucht daher nur so lange zu sein als es nötig ist, um das Drosselglied 30 sicher zu halten. Die kurze Länge des Rückspülkanals 23 erleichtert auch die Montage des Drosselgliedes 30 sowie dessen Zugänglichkeit zwecks Ersatz und Reinigung. Weiters wirkt sich die kurze Länge des Rückspülkanals 23 günstig aus, um eine Verkrackung des Kunststoffmaterials im Rückspülkanal 23 zu verhindern, zumal ja dieser Kanal nur beim Rückspülen von Schmelze durchströmt ist.

Der Steuerkörper 31 muss nicht ein in seiner Längsrichtung verschiebbarer Schieber sein, er kann auch als Drehschieber ausgebildet sein, wobei in diesem Fall mehrere Steueröffnungen 37 über den Umfang des Rohres des Drehschiebers verteilt sind. Das Prinzip eines in seiner Längsrichtung verschiebbaren Schiebers und eines Drehschiebers kann auch kombiniert Anwendung finden, das heißt, dass der rohrförmige Schieber sowohl in seiner Längsrichtung verschiebbar, als auch um seine Achse verdrehbar ist. Diese Ausführungsform eignet sich insbesondere dann, wenn die Unterteilung der Fläche der Siebnester 8, 9 nicht nur in Achsrichtung des Trägerkörpers 4 erfolgt, wie dies in den Fig. 1 bis 12 dargestellt ist, sondern auch quer dazu, also z.B. durch (zusätzliche) Wände 21, die parallel zur Zeichenebene liegen. Stets muss jedoch dafür gesorgt sein, dass die Wände 21 den Zustrom der zu filtrierenden Schmelze aus den Zuströmkanälen 10, 11 nicht wesentlich behindern.

Selbstverständlich ist die erfindungsgemäße Ausbildung auch auf Vorrichtungen anwendbar, die zwei oder mehr Trägerkörper 4 aufweisen. Bei einer Vorrichtung mit zwei Trägerkörpern mit je zwei Siebnestern verbleibt bei einer Konstruktion, bei welcher jedes Siebnest für die Rückspülung in zwei Abschnitte unterteilt ist, beim Rückspülvorgang jeweils nur ein Achtel der Siebfläche im Rückspüldurchfluss, d.h., die beim Rückspülvorgang verwendete Materialmenge konzentriert sich auf eine kleine Siebfläche, die mit hoher Fließgeschwindigkeit rückgespült wird, sodass eine gute Reinigung erzielt wird. Ebenso ist die erfindungsgemäße Ausbildung anwendbar auf Vorrichtungen, bei welchen ein einziger Trägerkörper 4 zwei oder mehr Siebnestpaare, also vier oder mehr Siebnester trägt.

Die in der Zeichnung dargestellten Ausführungsbeispiele sind der Einfachheit halber mit je einem einzigen Zuführkanal 2 bzw. Abgabekanal 3 dargestellt. In der Praxis ist es zumeist günstiger, mehr als einen Zuführkanal 2 bzw. Abgabekanal 3 vorzusehen, wobei lediglich die erwähnten Anschlussverhältnisse gewahrt bleiben müssen.

Die Ablösung der Schmutzteilchen aus den Siebnestern lässt sich bei der erfindungsgemäßen Konstruktion leicht dadurch verbessern, dass die Abfuhrkanäle 36 durch periodische Hin- und Herbewegung der Steueröffnungen 37 des betreffenden Steuerkörpers 31 abwechselnd geöffnet bzw. geschlossen werden, wodurch sich ein pulsierender Rückspülvorgang ergibt.

## Patentansprüche

1. Rückspülbare Filtervorrichtung für thermoplastisches Kunststoffmaterial, mit einem Gehäuse (1), in welchem zumindest ein Zuführkanal (2) für das zu filtrierende Material und zumindest ein Abgabekanal (3) für das filtrierte Material vorgesehen sind, und mit zumindest einem im Gehäuse (1) angeordneten Trägerkörper (4), der zumindest zwei Siebnester (8, 9) trägt und im Gehäuse (1) zwischen einer Filtrierstellung und zumindest einer, einem Siebnest (8, 9) zugeordneten Rückspülstellung verlagerbar ist, wobei in der Filtrierstellung an der Zustromseite der Siebnester (8, 9) angeordnete Verteilerräume (14, 15) über Zuströmkanäle (10, 11) mit zumindest einem Zufuhrkanal (2) in Fließverbindung stehen und an der Abstromseite der Siebnester (8, 9) angeordnete Sammelräume (16, 17) über Abströmkanäle (18, 19) mit zumindest einem Abgabekanal (3) in Fließverbindung stehen, und in Rückspülstellung des Trägerkörpers (4) filtriertes Material aus dem Sammelraum (16, 17) eines Siebnestes (8, 9) über einen im Trägerkörper (4) angeordneten Rückspülkanal (23) in den Sammelraum (16, 17) eines anderen, zu reinigenden Siebnestes (8, 9) gelangt und bei geschlossenem Abströmkanal (18, 19) dieses anderen Siebnestes (8, 9) zusammen mit der Verunreinigung dieses Siebnestes (8, 9) über den Verteilerraum (14, 15) dieses Siebnestes (8, 9) in einen Rückspülauslasskanal (38) abführbar ist, **dadurch gekennzeichnet, dass** jedem Siebnest (8, 9) zumindest ein im Gehäuse (1) relativ zum Trägerkörper (4) verlagerbarer Steuerkörper (31) für die abschnittweise Rückspülung dieses Siebnestes (8, 9) zugeordnet ist, wobei jeder dieser Steuerkörper (31) einen Abfuhrkanal (36) bildet, der in der Rückspülstellung über zumindest eine Steueröffnung (37) mit zumindest einem Rückspülauslasskanal (38) in Fließverbindung steht.

2. Vorrichtung nach Anspruch 1, **dadurch gekennzeichnet, dass** pro Siebnest (8, 9) zumindest zwei voneinander unabhängig verlagerbare Steuerkörper (31) vorhanden sind, deren jeder einem Abschnitt (14', 14", 15', 15") des Siebnestes (8, 9) für die Rückspülung dieses Abschnittes zugeordnet ist.

3. Vorrichtung nach Anspruch 1 oder 2, **dadurch gekennzeichnet, dass** jeder Steuerkörper (31) von einem in seiner Längsrichtung verschiebbaren und/oder um seine Längsachse verdrehbaren Schieber (34) gebildet ist, wobei der Abfuhrkanal (36) sich in Achsrichtung des Schiebers (34) erstreckt und jede Steueröffnung (37) die Wand des Abfuhrkanals (36) durchsetzt.

4. Vorrichtung nach Anspruch 3, **dadurch gekennzeichnet, dass** zumindest ein Schieber (34) zumindest zwei Steueröffnungen (37) hat, die für einen verschiebbaren Schieber in Längsrichtung des Schiebers (34) relativ zueinander versetzt sind, für einen verdrehbaren Schieber (34) in Umfangsrichtung des Schiebers.

5. Vorrichtung nach Anspruch 3 oder 4, **dadurch gekennzeichnet, dass** jeder Steuerkörper (31) von einem Rohr gebildet ist, das in einer Bohrung (35) des Gehäuses (1) verschiebbar und/oder verdrehbar geführt ist.

6. Vorrichtung nach einem der Ansprüche 1 bis 5, **dadurch gekennzeichnet, dass** jeder Rückspülauslasskanal (38) etwa mittig in Bezug auf den ihm zugeordneten Abschnitt (14', 14", 15', 15") des Siebnestes (8, 9) angeordnet ist.

7. Vorrichtung nach einem der Ansprüche 1 bis 6, **dadurch gekennzeichnet, dass** zumindest ein Siebnest (8, 9) zwei gekrümmte Lochplatten (12, 13) aufweist, zwischen denen eine im flachgelegten Zustand kreisrunde Filtereinlage (33) angeordnet ist, wobei beide Lochplatten (12, 13) in eine Aufnahmeöffnung (32) des Trägerkörpers (4) eingesetzt sind, die einen entsprechend der Krümmung der Lochplatten (12, 13) ovalen Querschnitt, gesehen in Achsrichtung der Aufnahmeöffnung (32), hat, wobei die Lochplatten (12, 13) so angeordnet sind, dass die konvexe Seite beim Filtriervorgang zustromseitig liegt.

8. Vorrichtung nach Anspruch 7, **dadurch gekennzeichnet, dass** bei zumindest einem Siebnest (8, 9) der Sammelraum (16, 17) durch zumindest eine die Lochplatten (12, 13) abstützende Wand (21) in Abschnitte des Sammelraumes (16, 17) unterteilt ist.

## Claims

1. A backwashable filtering device for thermoplastic plastics material, comprising a housing (1) in which at least one feed channel (2) is provided for the material to be filtered and at least one delivery channel (3) is provided for the filtered material, and comprising at least one carrying body (4) which is arranged in the housing (1), carries at least two nests of screens (8, 9) and is displaceable in the housing (1) between a filtering position and at least one backwashing position associated with a nest of screens (8, 9), wherein, in the filtering position, distribution chambers (14, 15) arranged on the inflow side of the nests of screens (8, 9) are fluidically connected to at least one feed channel (2) via inflow channels (10, 11), and collecting chambers (16, 17) arranged on the outflow side of the nests of screens (8, 9) are fluidically connected to at least one delivery channel (3) via outflow channels (18, 19), and, in the backwashing position of the carrying body (4), filtered material passes from the collecting chamber (16, 17) of one nest of screens (8, 9), through a backwashing channel (23) arranged in the carrying body (4) and into the collecting chamber (16, 17) of another nest of screens (8, 9) to be cleaned and, when the outflow channel (18, 19) of this other nest of screens (8, 9) is closed, is dischargeable together with the impurities from this nest of screens (8, 9) into a backwashing outlet channel (38) via the distribution chamber (14, 15) of this nest of screens (8, 9), **characterised in that** at least one control body (31), which is displaceable in the housing (1) relative to the carrying body (4), is associated with each nest of screens (8, 9) for the backwashing of this nest of screens (8, 9) portion by portion, each of these control bodies (31) forming a discharge channel (36) which, in the backwashing position, is fluidically connected to at least one backwashing outlet channel (38) via at least one control opening (37).

2. A device according to claim 1, **characterised in that** at least two control bodies (31), which are displaceable independently of one another, are provided for each nest of screens (8, 9), each control body (31) being associated with a portion (14', 14", 15', 15") of the nest of screens (8, 9) for the backwashing of that portion.

3. A device according to claim 1 or 2, **characterised in that** each control body (31) is formed by a slider (34) which is displaceable in its longitudinal direction and/or rotatable about its longitudinal axis, wherein the discharge channel (36) extends in the axial direction of the slider (34) and each control opening (37) pierces the wall of the discharge channel (36).

4. A device according to claim 3, **characterised in that** at least one slider (34) has at least two control openings (37) which, for a displaceable slider, are spaced apart in the longitudinal direction of the slider (34) and, for a rotatable slider (34), are spaced apart in the circumferential direction of the slider.

5. A device according to claim 3 or 4, **characterised in that** each control body (31) is formed by a tube which is displaceably and/or rotatably guided in a bore (35) of the housing (1).

6. A device according to any one of claims 1 to 5, **characterised in that** each backwashing outlet channel (38) is arranged substantially centrally in relation to its associated portion (14', 14", 15', 15") of the nest of screens (8, 9).

7. A device according to any one of claims 1 to 6, **characterised in that** at least one nest of screens (8, 9) has two curved perforated plates (12, 13), between which is arranged a filter insert (33) which is circular when laid flat, wherein the two perforated plates (12, 13) are inserted into a receiving opening (32) in the carrying body (4), the receiving opening (32) having an oval cross-section corresponding to the curvature of the perforated plates (12, 13) when seen in the axial direction of the receiving opening (32), and wherein the perforated plates (12, 13) are arranged so that their convex side lies on the inflow side during the filtering process.

8. A device according to claim 7, **characterised in that**, in the case of at least one nest of screens (8, 9), the collecting chamber (16, 17) is divided into collecting-chamber portions by at least one wall (21) supporting the perforated plates (12, 13).

## Revendications

1. Dispositif de filtrage nettoyable à contre-courant pour une matière thermoplastique, comprenant un boîtier (1), dans lequel au moins une gaine d'alimentation (2) de la matière à filtrer et au moins une gaine de décharge (3) de la matière filtrée sont prévues, et comprenant au moins un corps de support (4) disposé dans le boîtier (1), qui porte au moins deux garnitures de crible (8, 9) et est déplaçable dans le boîtier (1) entre une position de filtrage et au moins une position de nettoyage à contre-courant attribuée à une garniture de crible (8, 9), dans la position de filtrage, des espaces de distribution (14, 15) disposés en amont des garnitures de crible (8, 9) étant en connexion d'écoulement à travers des conduits d'affluence (10, 11) avec au moins une gaine d'alimentation (2), tandis que des espaces collecteurs (16, 17) en aval des garnitures de crible (8, 9) sont en connexion d'écoulement à travers des conduits de décharge (18, 19) avec au moins une gaine de décharge (3), et dans la position de nettoyage à contre-courant du corps de support (4) la matière filtrée de l'espace collecteur (16, 17) d'une garniture de crible (8, 9) arrive à l'espace collecteur (16, 17) d'une autre garniture de crible (8, 9) à nettoyer à travers un conduit de nettoyage à contre-courant (23) disposé dans le corps de support (4) et, avec le conduit de décharge (18, 19) fermé de cette autre garniture de crible (8, 9), peut être déchargée conjointement avec l'impureté de cette garniture de crible (8, 9) à travers l'espace de distribution (14, 15) de cette garniture de crible (8, 9) dans un conduit déchargeur de nettoyage à contre-courant (38), **caractérisé en ce, qu'**au moins un corps de commande (31), qui peut être déplacé relativement au corps de support (4) dans le boîtier (1), est associé à chaque garniture de crible (8, 9) pour un nettoyage à contre-courant en sections de cette garniture de crible (8, 9), chacun de ces corps de commande (31) formant un conduit de sortie (36), qui, dans la position de nettoyage à contre-courant, est en connexion d'écoulement avec au moins un conduit déchargeur de nettoyage à contre-courant (38) à travers au moins une ouverture de commande (37).

2. Dispositif selon la revendication 1, **caractérisé en ce, qu'**au moins deux corps de commande (31) déplaçables indépendamment l'un de l'autre sont prévus par garniture de crible (8, 9), chacun desdits corps de commande étant associé à une section (14', 14", 15', 15") de la garniture de crible (8, 9) pour le nettoyage à contre-courant de cette section.

3. Dispositif selon la revendication 1 ou 2, **caractérisé en ce, que** chaque corps de commande (31) est formé par un coulisseau (34), qui peut glisser en direction longitudinale et/ou peut tourner autour de son axe longitudinale, dans lequel le conduit de sortie (36) s'étend en direction de l'axe du coulisseau (34) et chaque ouverture de commande (37) pénètre la paroi du conduit de sortie (36).

4. Dispositif selon la revendication 3, **caractérisé en ce, qu'**au moins un coulisseau (34) comprend au moins deux ouvertures de commande (37), qui, pour un coulisseau glissant, sont décalés l'une relativement à l'autre en direction longitudinale, mais pour un coulisseau (34) tournant sont décalés en direction périphérique du coulisseau.

5. Dispositif selon la revendication 3 ou 4, **caractérisé en ce, que** chaque corps de commande (31) est formé par un tuyau, qui est guidé pour se déplacer et/ou pour tourner dans un alésage (35) du boîtier (1).

6. Dispositif selon une quelconque des revendications 1 à 5, **caractérisé en ce, que** chaque conduit déchargeur de nettoyage à contre-courant (38) est disposé environ au centre par rapport à la section (14', 14", 15', 15"), attribuée à celui-ci, de la garniture de crible (8, 9).

7. Dispositif selon une quelconque des revendications 1 à 6, **caractérisé en ce, qu'**au moins une garniture de crible (8, 9) comprend deux plaques courbes à trous (12, 13), entre lesquelles un filtre de rechange (33) circulaire, en condition plate, est disposé, dans lequel les deux plaques à trous (12, 13) sont insérées dans une ouverture de réception (32) du corps de support (4), qui a une section transversale ovale, vue en direction axiale de l'ouverture de réception (32), en correspondance avec la courbure des plaques à trous (12, 13), et dans lequel les plaques à trous (12, 13) sont disposées d'une manière, que le côté convexe, pendant la procédure de filtrage est situé en amont.

8. Dispositif selon la revendication 7, **caractérisé en ce, qu'**avec au moins une garniture de crible (8, 9), l'espace collecteur (16, 17) est divisé en sections de l'espace collecteur (16, 17) par au moins une paroi (21), qui étaye les plaques à trous (12, 13).
